# EUROPÄISCHE PATENTSCHRIFT

(11) **EP 0 871 017 B1**
(45) Veröffentlichungstag und Bekanntmachung des Hinweises auf die Patenterteilung: **30.07.2008**
(21) Anmeldenummer: 97810211.9
(22) Anmeldetag: 10.04.1997
(51) Int. Cl.: G01F 1/84

(54) **Coriolis-Massedurchflussaufnehmer mit einem Messrohr**
Coriolis mass flow sensor with a measuring tube
Débitmètre massique Coriolis avec un tube de mesure

(43) Veröffentlichungstag der Anmeldung: 14.10.1998
(73) Patentinhaber: Endress + Hauser Flowtec AG, 4153 Reinach BL 1 (CH); Endress+Hauser (Deutschland) AG+Co. KG, 79576 Weil am Rhein (DE)
(72) Erfinder: Koudal, Ole, 4153 Reinach (BL) (CH); Wenger, Alfred, Dr., 8413 Neftenbach (ZH) (CH)
(74) Vertreter: Andres, Angelika Maria

(56) Entgegenhaltungen:
- EP-A- 0 473 919
- EP-A- 0 687 893
- EP-A- 0 770 858
- DE-A- 3 824 351
- FR-A- 1 316 083
- FR-A- 2 290 661
- US-A- 5 307 689

## Beschreibung

Die Erfindung betrifft Massedurchflußaufnehmer nach dem Coriolis-Prinzip mit einem Meßrohr.

Mit Coriolis-Massedurchflußmessern lassen sich bekanntlich der Massedurchfluß und/oder die Dichte von Fluiden messen, die in einer Rohrleitung strömen, in die der Coriolis-Massedurchflußaufnehmer eingesetzt ist.

Coriolis-Massedurchflußaufnehmer mit mindestens zwei Meßrohren können gegenüber aus der Rohrleitung stammenden Störungen, wie z.B. gegenüber deren Vibrationen oder gegenüber starken Druckschwankungen des Fluids, besser immun gemacht werden als nur ein einziges Meßrohr aufweisende Coriolis-Massedurchflußaufnehmer, die auch gegenüber anderen auf sie einwirkenden Störungen, wie z.B. Schlägen gegen das Gehäuse, empfindlicher sind als solche mit mindestens zwei Meßrohren.

Zu diesen Störungen gehören auch Schwingungsanteile, die vom mit einer aktuellen Frequenz schwingenden Meßrohr auf die Rohrleitung übertragen werden, die an deren immer vorhandenen Unstetigkeitsstellen reflektiert werden und die somit wieder zum Meßrohr gelangen. Diese Schwingungsanteile sind besonders störend, weil sie dieselbe aktuelle Frequenz wie das Meßrohr haben. Daher können diese Störungen durch elektronische Maßnahmen überhaupt nicht und durch mechanische Maßnahmen nur schwer beseitigt werden.

In der US-A 53 07 689 sind sowohl ein Coriolis-Massedurchflußmesser mit einem einzigen Meßrohr als auch ein Coriolis-Massedurchflußaufnehmer mit zwei parallelen Meßrohren beschrieben, von denen jeder in eine Rohrleitung einfügbar ist und im Betrieb von einem zu messenden Fluid durchströmt wird.

Der Coriolis-Massedurchflußaufnehmer mit einem einzigen Meßrohr entsprechend den Fig. 1 und 2 der US-A 53 07 689 umfaßt
- eine Trägerplatte (dort als "support base" bezeichnet),
   -- die über mindestens ein mechanisches Vibrationsdämpfungselement (dort als "vibration absorption element" bezeichnet) auf einen Boden (dort als "floor" bezeichnet) gestellt ist,
- das in einer zu einer Oberseite der Trägerplatte parallelen Ebene U- oder U+J-förmig gebogene Meßrohr,
   -- von dem ein erster und ein zweiter Schenkel, der parallel zum ersten Schenkel verläuft, zu Schwingungen in dieser Ebene anzuregen sind und in einer ersten an der Trägerplatte angebrachten Halterung bzw. in einer zweiten an der Trägerplatte angebrachten Halterung befestigt sind,
- eine am ersten Schenkel und der Trägerplatte angebrachte erste Erregeranordnung sowie eine am zweiten Schenkel und der Trägerplatte angebrachte zweite Erregeranordnung der Schwingungen,
- einen am ersten Schenkel in der Nähe der ersten Halterung angeordneten ersten Sensor für die Schwingungen des ersten Schenkels,
- einen am ersten Schenkel in der Nähe der zweiten Halterung angeordneten zweiten Sensor für die Schwingungen des ersten Schenkels,
- einen am zweiten Schenkel in der Nähe der ersten Halterung angeordneten dritten Sensor für die Schwingungen des zweiten Schenkels,
- einen am zweiten Schenkel in der Nähe der zweiten Halterung angeordneten vierten Sensor für die Schwingungen des zweiten Schenkels, und
- eine Erregungs/Auswerte-Elektronik,
   -- die eine Teilschaltung zur Eliminierung von auf äußeren Schwingungen beruhenden Störsignalen enthält.

Der Coriolis-Massedurchflußaufnehmer mit zwei Meßrohren entsprechend den Fig. 7 bis 11 der US-A 53 07 689 umfaßt
- ein in einer ersten Ebene verlaufendes erstes U-förmiges Meßrohr,
   -- von dem ein erster gerader Schenkel und ein zweiter gerader Schenkel, der parallel zum ersten Schenkel verläuft und über ein erstes Bogenstück mit dem ersten Schenkel verbunden ist, zu Schwingungen in der ersten Ebene anzuregen sind,
- ein in einer zweiten Ebene verlaufendes zweites U-förmiges Meßrohr,
   -- von dem ein erster gerader Schenkel und ein zweiter gerader Schenkel, der parallel zum ersten Schenkel verläuft und über ein zweites Bogenstück mit dem ersten Schenkel verbunden ist, zu Schwingungen in der zweiten Ebene anzuregen sind,
- einen zylindrischen Träger (dort als "support" bezeichnet), der einseitig an einem Verteilerstück (dort als "manifold" bezeichnet) fixiert ist und der zwischen dem ersten und dem zweiten Meßrohr verläuft,
- eine am Träger in der Nähe des Verteilerstücks angebrachte erste Halterung für die beiden Meßrohre,
- eine am Träger in der Nähe der beiden Bogenstücke angebrachte zweite Halterung für die beiden Meßrohre,
- eine am ersten Schenkel des ersten Meßrohrs und am Träger angebrachte erste Erregeranordnung sowie eine am zweiten Schenkel des ersten Meßrohrs und am Träger angebrachte zweite Erregeranordnung der Schwingungen des zweiten Meßrohrs,
- eine am ersten Schenkel des zweiten Meßrohrs und am Träger angebrachte dritte Erregeranordnung sowie eine am zweiten Schenkel des zweiten Meßrohrs und am Träger angebrachte vierte Erregeranordnung der Schwingungen des zweiten Meßrohrs,
- einen am ersten Schenkel des ersten Meßrohrs zwischen der ersten Halterung und der ersten Erregeranordnung angeordneten ersten Sensor für die Schwingungen des ersten Schenkels des ersten Meßrohrs,
- einen am zweiten Schenkel des ersten Meßrohrs zwischen der ersten Halterung und der zweiten Erregeranordnung angeordneten zweiten Sensor für die Schwingungen des zweiten Schenkels des ersten Meßrohrs,
- einen am ersten Schenkel des zweiten Meßrohrs zwischen der ersten Halterung und der dritten Erregeranordnung angeordneten dritten Sensor für die Schwingungen des ersten Schenkels des zweiten Meßrohrs,
- einen am zweiten Schenkel des zweiten Meßrohrs zwischen der ersten Halterung und der vierten Erregeranordnung angeordneten vierten Sensor für die Schwingungen des zweiten Schenkels des zweiten Meßrohrs und
- eine Erregungs/Auswerte-Elektronik,
   -- die eine Teilschaltung zur Eliminierung von auf äußeren Schwingungen beruhenden Störsignalen enthält.

Bei diesen beiden Varianten von Coriolis-Massedurchflußmessern wird also versucht, die eingangs erwähnten rohrleitungs-bedingten Störungen durch schaltungstechnische Mittel zu beseitigen, wobei allerdings die mit der Schwingung des Meßrohrs gleichfrequenten Anteile nicht beseitigbar sind. Im übrigen lassen die konstruktiven Einzelheiten der beiden Coriolis-Massedurchflußaufnehmer keine der Störungsunterdrückung insgesamt dienenden konstruktiven Mittel erkennen.

In der DE-A 38 24 351 ist ferner ein Coriolis-Massedurchflußaufnehmer beschrieben, der in eine Rohrleitung einfügbar ist und im Betrieb von einem zu messenden Fluid durchströmt wird,
- mit einem mit der Rohrleitung über einen Fluid-Einlaß bzw. einen Fluid-Auslaß zu verbindenden, schwingungssteifen Gehäuse,
- mit einem ersten in einer ersten Ebene gebogenen, vom Fluid durchströmten, in den Fluid-Einlaß und in den Fluid-Auslaß mündenden und dadurch mit dem Gehäuse starr verbundenen Meßrohr,
- mit einem zweiten in einer zweiten Ebene gebogenen, vom Fluid durchströmten, in den Fluid-Einlaß und in den Fluid-Auslaß mündenden und dadurch mit dem Gehäuse starr verbundenen Meßrohr, das zum ersten Meßrohr parallel verläuft,
   -- welche beiden Meßrohre zu Schwingungen senkrecht zu den beiden Ebenen mittels einer Erregeranordnung anzuregen sind,
- mit einem zwischen dem Fluid-Einlaß und der Erregeranordnung an den beiden Meßrohren angeordneten ersten Sensor für deren Schwingungen und
- mit einem zwischen dem Fluid-Auslaß und der Erregeranordnung an den beiden Meßrohren angeordneten zweiten Sensor für deren Schwingungen.

Bei dieser Anordnung soll die starre Verbindung der beiden Meßrohre mit dem schwingungssteifen Gehäuse, also eine mechanische Maßnahme, dazu dienen, die erwähnten äußeren Störungen von den beiden Meßrohren fernzuhalten. Es hat sich jedoch gezeigt, daß damit keine ausreichende Unterdrückung äußerer Strörungen erreicht werden kann.

In der nicht vorveröffentlichten EP-A 770 858 ist ein Coriolis-Massedurchflußaufnehmer beschrieben, der in eine Rohrleitung einfügbar ist und im Betrieb von einem zu messenden Fluid durchströmt wird,
- mit einem mit der Rohrleitung über einen Fluid-Einlaß bzw. einen Fluid-Auslaß zu verbindenden Gehäuse,
- mit einer innerhalb des Gehäuses angeordneten Grundplatte,
   -- die mit dem Gehäuse über mindestens ein mechanisches Dämpfungselement verbunden ist,
      --- das an einer Schwingungs-Knotenlinie der Grundplatte befestigt ist,
- mit einem einzigen, in einer zu einer Oberseite der Grundplatte parallelen Ebene gebogenen, vom Fluid durchströmten, in den Fluid-Einlaß und in den Fluid-Auslaß mündenden Meßrohr,
   -- von dem ein zu Schwingungen senkrecht zur Ebene anzuregendes Teilrohr mittels einer im Bereich eines ersten Randes der Grundplatte angeordneten ersten Fixierung und mittels einer im Bereich eines zweiten Randes der Grundplatte angeordneten zweiten Fixierung an dieser befestigt ist und
   -- von dem ein erstes Verbindungsteilrohr von der ersten Fixierung zum Fluid-Einlaß und ein zweites Verbindungsteilrohr von der zweiten Fixierung zum Fluid-Auslaß führt,
- mit einem Erreger der Schwingungen und
- mit einem in der Nähe der ersten Fixierung angeordneten ersten Sensor für die Schwingungen des Teilrohrs sowie einem in der Nähe der zweiten Fixierung angeordneten zweiten Sensor für die Schwingungen des Teilrohrs.

In der EP-A 473 919 ist ferner ein Coriolis-Massedurchflußaufnehmer gezeigt, der in eine Rohrleitung einfügbar ist und im Betrieb von einem zu messenden Fluid durchströmt wird,
- mit einem mit der Rohrleitung über einen Fluid-Einlaß bzw. einen Fluid-Auslaß zu verbindenden Gehäuse
- mit einem innerhalb des Gehäuses angeordneten steifen Träger in den ein Antiresonator eingespannt ist,
- mit einem vom Fluid durchströmten, in den Fluid-Einlaß und in den Fluid-Auslaß mündenden Meßrohr,
   -- von dem ein zu Schwingungen anzuregendes Teilrohr mittels einer einlaß-seitigen Fixierung sowie mittels einer auslaß-seitigen Fixierung am Träger befestigt ist und
   -- von dem ein einlaß-seitiges Verbindungsteilrohr von der einlaß-seitigen Fixierung zum Fluid-Einlaß und ein auslaß-seitiges Verbindungsteilrohr von der auslaß-seitigen Fixierung zum Fluid-Auslaß führt,
- mit einer zwischen dem Teilrohr und dem Träger einwirkenden Erregeranordnung der Schwingungen des Teilrohrs,
- mit einem in der Nähe der einlaß-seitigen Fixierung teilweise am Teilrohr angeordneten ersten Sensor für dessen Schwingungen und
- mit einem in der Nähe der auslaß-seitigen Fixierung teilweise am Teilrohr angeordneten zweiten Sensor für dessen Schwingungen.

Es ist ein ziel der Erfindung, einen Coriolis-Massedurchflußaufnehmer anzugeben, der mittels weiterer mechanischer Mittel möglichst unanfällig gegenüber den genannten äußeren Störungen gemacht ist.

Hierzu besteht die Erfindung in einem Coriolis-Massedurchflußaufnehmer, der in eine Rohrleitung einfügbar ist und im Betrieb von einem zu messenden Fluid durchströmt wird, gemäß Anspruch 1.

Nach einer ersten bevorzugten Ausgestaltung der Erfindung hat das Teilrohr die Form eines Kreisbogens, wobei bevorzugt jedes Verbindungsteilrohr mit einem kleineren Krümmungsradius als das Teilrohr gebogen ist.

Nach einer zweiten bevorzugten Ausgestaltung der Erfindung hat das Meßrohr eine Nennweite von kleiner als 10 mm, insb. eine Nennweite von ca. 1 mm.

Nach einer dritten bevorzugten Ausgestaltung der Erfindung ist die Masse des Trägers groß gegenüber der Masse des Teilrohrs.

Nach einer vierten bevorzugten Ausgestaltung der Erfindung weisen ein mit dem Teilrohr verbundenes Teil des ersten Sensors und ein mit dem Teilrohr verbundenes Teil des zweiten Sensors eine im Vergleich zur Masse des Teilrohrs geringe Masse auf.

Ein wesentlicher Vorteil der Erfindung besteht darin, daß am Meßrohr bzw. den Meßrohren kein Bauteil einer Erregeranordnung anzubringen ist und daß das Meßrohr bzw. die Meßrohre somit am Ort, an dem es bzw. sie erregt werden, keine gegenüber der eigene Masse zusätzliche Masse aufweisen. Dieser Vorteil macht sich um so stärker bemerkbar, je kleiner die Nennweite des Meßrohrs ist und ist insb. bei Nennweiten im Bereich von 1 mm sehr wichtig.

Ein weiterer Vorteil der Erfindung besteht darin, daß durch die von ihr vorgeschlagene und als innere Schwingungskompensation verstehbare Lösung des genannten Problems praktisch keine Schwingungsanteile vom Meßrohr bzw. von den Meßrohren, die mit einer aktuellen Frequenz schwingen, auf die Rohrleitung übertragen werden.

Die Erfindung wird nun anhand der Figuren der Zeichnung näher erläutert, in der ein Ausführungsbeispiel ungefähr maßstabsgerecht dargestellt ist und in der gleiche Teile mit denselben Bezugszeichen bezeichnet sind.
- Fig. 1: zeigt im Längsschnitt eine Seitenansicht eines Massedurchflußaufnehmers, und
- Fig. 2: zeigt eine Draufsicht auf den Massedurchflußaufnehmer von Fig. 1 nach Abnahme eines Gehäuse-Oberteils.

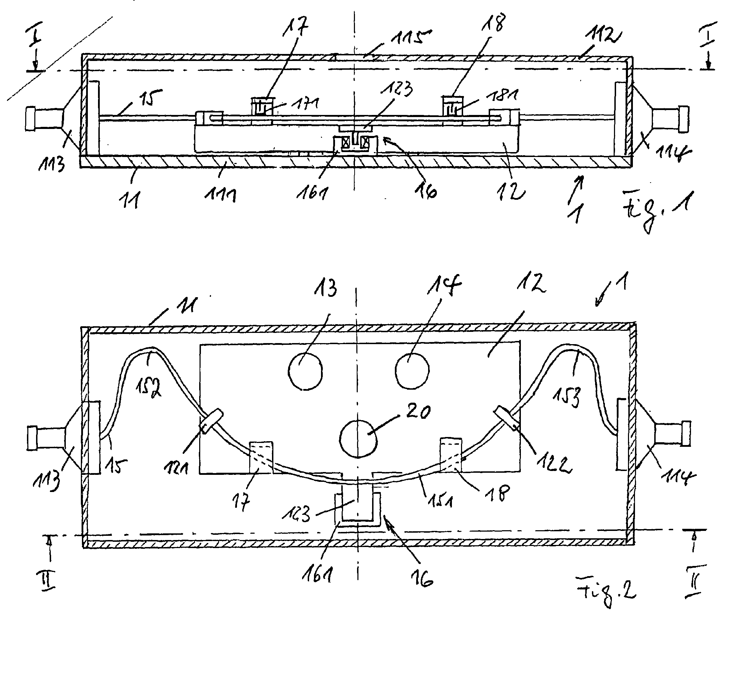

Ein gemäß Fig. 1 und 2 in entlang der Linie II - II von Fig. 2 geschnittener Seitenansicht bzw. in Draufsicht entlang der Linie I - I von Fig. 1 dargestellter Coriolis-Massedurchflußaufnehmer 1, der in eine nicht dargestellte Rohrleitung, z.B. mittels Flanschen, Gewinde-Verbindungen oder Klemm-Vorrichtungen, einfügbar ist, wird im Betrieb von einem zu messenden Fluid durchströmt und hat ein Gehäuse 11, in dem seine wesentlichen Teile zum Schutz vor Umwelteinflüssen angeordnet sind.

Wie aus den Figuren ersichtlich ist, kann der Coriolis-Massedurchflußaufnehmer des Ausführungsbeispiels so in die nicht dargestellte Rohrleitung eingefügt werden, daß er mit dieser axial fluchtet.

Das Gehäuse 11 kann, wie in den Fig. 1 und 2 angedeutet ist, aus mehreren Teilen zusammengesetzt sein, nämlich aus einem Unterteil in Form von z.B. einer Bodenplatte 111, aus einem Oberteil 112, aus einem Fluid-Einlaß 113 und einem Fluid-Auslaß 114. Diese Teile sind im fertigen Zustand des Coriolis-Massedurchflußaufnehmers fest und unlösbar miteinander verbunden.

Um benötigte elektrische Leitungen trotzdem in das Gehäuse hinein- bzw. daraus herausführen zu können, ist im Oberteil 112 eine Öffnung 115 vorgesehen, in die eine geeignete Leitungsdurchführung dicht eingesetzt werden kann.

Innerhalb des Gehäuses 11 ist ein Träger 12 angeordnet, der im Ausführungsbeispiel die Form einer rechteckigen dicken Platte hat. Die Masse des Trägers 12 ist bevorzugt groß gegenüber der Masse des Teilrohrs 151. Der Träger 12 ist mit dem Gehäuse 11, im Ausführungsbeispiel mit der Bodenplatte 111, über Dämpfungselemente 13, 14, 20 verbunden; die Dämpfungselemente 13, 14 oder das Dämpfungselement 20 können auch entfallen.

Der Träger 12 ist also nicht fest, sondern lediglich so am Gehäuse 11 fixiert, daß er zwar in allen Richtungen noch gegenüber dem Gehäuse 11 beweglich ist, daß jedoch Bewegungen, insb. Stöße oder Schwingungen, die vom Gehäuse ausgehen, allenfalls nur stark gedämpft auf den Träger 12 übertragen werden; er hält daher einen Abstand zur Bodenplatte 111 ein, die ein Anschlagen verhindert. Parallel zu einer Oberseite des Trägers 12 verläuft ein Meßrohr 15, das in einer zu dieser Oberseite parallelen Ebene gebogen und vom Fluid durchströmt ist. Das Meßrohr 15 mündet in den Fluid-Einlaß 113 und in den Fluid-Auslaß 114.

Im Bereich des Trägers 12 hat das Meßrohr 15 ein Teilrohr 151, das bevorzugt die Form eines Kreisbogens hat und das mittels einer Erregeranordnung 16, z.B. mittels einer elektromagnetischen, insb. elektrodynamischen, Erregeranordnung, zu Schwingungen senkrecht zur Ebene, in der das Meßrohr 15 gebogen ist, angeregt wird. Das Teilrohr 151 ist an einander gegenüberliegenden Rändern des Trägers 12 mittels Fixierungen 121, 122 an diesem befestigt.

Die Erregung der Schwingungen des Teilrohrs 151 erfolgt im Gegensatz zu den Anordnungen nach dem Stand der Technik, bei denen die Erregeranordnung entweder zwischen dem Träger und dem Meßrohr oder zwischen den Meßrohren selbst angeordnet ist und daher direkt auf das Meßrohr bzw. die Meßrohre einwirkt, bei der Erfindung indirekt dadurch, daß die Erregeranordnung 16 zwischen Gehäuse 11 und Träger 12 einwirkt. Da der Träger 12 mittels der Dämpfungselemente 13, 14, 20 gegenüber dem Gehäuse 11 schwingfähig gelagert ist, werden die Schwingungen des Trägers 12 auf das Teilrohr 151 übertragen.

Im Ausführungsbeispiel der Fig. 1 und 2 ist die Erregeranordnung 16 neben dem Träger 12 angeordnet. Damit die erwähnte Einwirkung auf den Träger 12 erfolgen kann, ist dieser mit einem seitlichen Fortsatz 123 versehen, zwischen dem und dem Gehäuse 11 die Erregeranordnung 16 sich befindet. Der Fortsatz 123 ist dünner als der Träger 12. Eine Längssymmetrielinie des Fortsatzes 123 fällt mit einer Quersymmetrielinie des Trägers 12 zusammen.

Die Erregeranordnung 16 umfaßt einen Spulenträger 161, eine Spule und einen Dauermagneten, der am Fortsatz 123 befestigt ist und in die Spule 162 taucht. Der Spulenträger 161 ist an der Bodenplatte 111 des Gehäuses 11 befestigt. Es kann eine der üblichen Erregerschaltungen zur Erregung der Schwingungen dienen, die die Nutz-Schwingungen des Teilrohrs 151 und somit des Meßrohrs 15 sind.

Von der Fixierung 121 führt ein Verbindungsteilrohr 152 zum Fluid-Einlaß 113. Das Verbindungsteilrohr 152 vermittelt einen knickfreien Übergang zwischen der Richtung des aus der Fixierung 121 austretenden Endes des Teilrohrs 151 und der Richtung der Rohrleitung. Diese Richtung muß das eine Ende des Meßrohrs 15 bei seinem Einmünden in den Fluid-Einlaß 113 haben.

In vergleichbarer, jedoch insgesamt spiegelbildlicher Weise führt von der Fixierung 122 ein Verbindungsteilrohr 153 zum Fluid-Auslaß 114. Das Verbindungsteilrohr 153 vermittelt einen knickfreien Übergang zwischen der Richtung des aus der Fixierung 122 austretenden Endes des Teilrohrs 151 und der Richtung der Rohrleitung. Diese Richtung muß das andere Ende des Meßrohrs 15 bei seinem Einmünden in den Fluid-Auslaß 114 haben.

Das Verbindungsteilrohr 152 folgt nach Verlassen der Fixierung 121 zunächst noch der Krümmung des Teilrohrs 151 und geht dann in eine entgegengesetzt gerichtete Krümmung mit kleinerem Krümmungsradius als der Krümmungsradius des Teilrohrs 151 über. Nach nochmaliger Umkehr der Krümmungsrichtung mündet das Verbindungsteilrohr 152 im Fluid-Einlaß 113.

Auch das Verbindungsteilrohr 153 folgt nach Verlassen der Fixierung 122 zunächst noch der Krümmung des Teilrohrs 151 und geht dann in eine entgegengesetzt gerichtete Krümmung mit kleinerem Krümmungsradius als der des Teilrohrs 151 über. Nach nochmaliger Umkehr der Krümmungsrichtung mündet das Verbindungsteilrohr 153 im Fluid-Einlaß 114.

Das Teilrohr 151 und die Verbindungsteilrohre 152, 153 bilden das eine beabsichtigte Nennweite aufweisende Meßrohr 15 und gehen nahtlos ineinander über. In einer geeigneten Biegevorrichtung kann das Meßrohr 15 aus geraden Rohrstücken gebogen werden.

In der Nähe der Fixierung 121 ist am Teilrohr 151 ein erster Sensor 17 und in der Nähe der Fixierung 122 ist am Teilrohr 151 ein zweiter Sensor 18 für dessen Schwingungen angeordnet. Aus den von den Sensoren 17, 18 erzeugten Signalen läßt sich durch Ermittlung von deren Phasen- oder Zeitdifferenz in üblicher Weise der Massedurchfluß bestimmen. Die Sensoren 17, 18 sind z.B. elektromagnetische, insb. elektrodynamische, Sensoren.

Insb. bei den oben erwähnten Nennweiten des Teilrohrs 151 im Bereich von 1 mm weisen ein mit dem Teilrohr 151 verbundenes Teil 171 des Sensors 17 und ein mit dem Teilrohr 151 verbundenes Teil 181 des Sensors 18 eine im Vergleich zur Masse des Teilrohrs 151 geringe Masse auf.

Die Anwendung des der Erfindung zugrundeliegenden Prinzips der oben erwähnten indirekten Erregung des Meßrohrs bzw. der Meßrohre ist nicht auf das gezeigte Ausführungsbeispiel beschränkt, sondern kann immer dann mit Vorteil angewendet werden, wenn ein innerer, im Gehäuse federnd gelagerter Träger vorhanden ist, gegenüber dem das Meßrohr bzw. die Meßrohre zu Schwingungen angeregt werden. Dieser Träger ist dann gegenüber dem Gehäuse zu Schwingungen anzuregen.

## Patentansprüche

1. Coriolis-Massedurchflussaufnehmer (1), der in eine Rohrleitung einfügbar ist und im Betrieb von einem zu messenden Fluid durchströmt wird,
- mit einem mit der Rohrleitung über einen Fluid-Einlaß (113) bzw. einen Fluid-Auslaß (114) zu verbindenden Gehäuse (11),
- mit einem innerhalb des Gehäuses angeordneten steifen Träger (12), der mit dem Gehäuse über mindestens ein mechanisches Dämpfungselement (13, 14, 20) verbunden ist,
- mit einem vom Fluid durchströmten, in den Fluid-Einlaß und in den Fluid-Auslaß mündenden Meßrohr (15),
-- von dem ein zu Schwingungen anzuregendes Teilrohr (151) mittels einer einlaß-seitigen Fixierung (121) sowie mittels einer auslaß-seitigen Fixierung (122) am Träger befestigt ist und
-- von dem ein einlaß-seitiges Verbindungsteilrohr (152) von der einlaß-seitigen Fixierung (121) zum Fluid-Einlaß (113) und ein auslaß-seitiges Verbindungsteilrohr (153) von der auslaß-seitigen Fixierung (122) zum Fluid-Auslaß (114) führt,
- mit einer zwischen Gehäuse (11) und Träger (12) einwirkenden Erregeranordnung (16) der Schwingungen des Teilrohrs (151), die die Schwingungen indirekt erregt, in dem die Schwingungen des Trägers (12) auf das Teilrohr (151) übertragen werden,
- mit einem in der Nähe der einlaß-seitigen Fixierung (121) teilweise am Teilrohr (151) angeordneten ersten Sensor (17) für dessen Schwingungen und
- mit einem in der Nähe der auslaß-seitigen Fixierung (122) teilweise am Teilrohr angeordneten zweiten Sensor (18) für dessen Schwingungen.

2. Massedurchflußaufnehmer nach Anspruch 1, bei dem das Teilrohr (151) die Form eines Kreisbogens hat.

3. Massedurchflußaufnehmer nach Anspruch 2, bei dem jedes Verbindungsteilrohr (152, 153) mit einem kleineren Krümmungsradius als das Teilrohr (151) gebogen ist.

4. Massedurchflußaufnehmer nach einem der Ansprüche 1 bis 3, bei dem das Meßrohr (15) eine Nennweite von kleiner als 10 mm, insb. eine Nennweite von ca. 1 mm, hat.

5. Massedurchflußaufnehmer nach einem der Ansprüche 1 bis 4, bei dem die Masse des Trägers (12) groß gegenüber der Masse des Teilrohrs (151) ist.

6. Massedurchflußaufnehmer nach einem der Ansprüche 1 bis 5, bei dem ein mit dem Teilrohr (151) verbundenes Teil (171) des ersten Sensors (17) und ein mit dem Teilrohr verbundenes Teil (181) des zweiten Sensors (18) eine im Vergleich zur Masse des Teilrohrs geringe Masse aufweisen.

## Claims

1. Coriolis mass flow sensor (1) which can be inserted into a pipe and through which a fluid to be measured flows during operation
- with a housing (11) to be connected to the pipe via a fluid inlet (113) and a fluid outlet (114)
- with a rigid carrier (12) arranged inside the housing which is connected to the housing via at least one mechanical damping element (13, 14, 20)
- with a measuring tube (15) which opens out into the fluid inlet and fluid outlet and through which fluid flows
-- from which a partial pipe (151) which is to be excited to vibrate is secured to the carrier using a fixing unit (121) on the inlet side and a fixing unit (122) on the outlet side and
-- from which an inlet-side partial connection pipe (152) is routed from the inlet-side fixing unit (121) to the fluid inlet (113) and an outlet-side partial connection pipe (153) from the outlet-side fixing unit (122) to the fluid outlet (114)
- with an exciter arrangement (16) of the vibrations of the partial pipe (151) acting between the housing (11) and the carrier (12) that excites the vibrations indirectly by transmitting the vibrations of the carrier (12) to the partial pipe (151)
- with an initial sensor (17) partially arranged on the partial pipe (151) near the fixing unit (121) on the inlet side for the vibrations and
- with a second sensor (18) partially arranged on the partial pipe near the fixing unit (122) on the outlet side for the vibrations.

2. Mass flow sensor as per Claim 1 where the partial pipe (151) has the shape of a circular arc.

3. Mass flow sensor as per Claim 2 where every partial connecting pipe (152, 153) is bent with a smaller radius of curvature than the partial pipe (151).

4. Mass flow sensor as per one of the Claims 1-3 where the measuring tube (15) exhibits a nominal diameter smaller than 10 mm, particularly a nominal diameter of approx. 1 mm.

5. Mass flow sensor as per one of the Claims 1-4 where the mass of the carrier (12) is large compared to the mass of the partial pipe (151).

6. Mass flow sensor as per one of the Claims 1-5 where a part (171) of the first sensor (17) connected to the partial pipe (151) and a part (181) of the second sensor (18) connected to the partial pipe has a low mass compared to the mass of the partial pipe.

## Revendications

1. Débitmètre massique Coriolis (1), lequel peut être introduit dans une conduite et est parcouru en fonctionnement par un fluide à mesurer,
- avec un boîtier (11) à relier par l'intermédiaire de la conduite via une entrée fluide (113) ou une sortie fluide (114),
- avec un support (12) rigide disposé à l'intérieur du boîtier, lequel support est relié avec le boîtier par l'intermédiaire d'au moins un élément d'amortissement mécanique (13, 14, 20),
- avec un tube de mesure (15) parcouru par le fluide, débouchant dans l'entrée fluide et dans la sortie fluide,
-- tube dont un tube partiel (151) à exciter en vibrations est fixé sur un support au moyen d'une fixation (121) côté entrée et au moyen d'une fixation (122) côté sortie et
-- tube dont un tube partiel de liaison (152) côté entrée conduit de la fixation (121) côté entrée vers l'entrée fluide (113) et un tube partiel de liaison (153) côté sortie conduit de la fixation (122) côté sortie vers la sortie fluide (114),
- avec un circuit d'excitation (16) générant les vibrations du tube partiel (151), agissant entre le boîtier (11) et le support (12), qui génère indirectement les vibrations en ce que les vibrations du support (12) sont transmises au tube partiel (151),
- avec un premier capteur (17) disposé partiellement sur le tube partiel (151), à proximité de la fixation (121) côté entrée, destiné à mesurer les vibrations du tube, et
- avec un deuxième capteur (18) disposé partiellement sur le tube partiel (153), à proximité de la fixation (122) côté sortie, destiné à mesurer les vibrations du tube.

2. Débitmètre massique Coriolis selon la revendication 1, pour lequel le tube partiel (151) a la forme d'un arc de cercle.

3. Débitmètre massique Coriolis selon la revendication 2, pour lequel chaque tube partiel de liaison (152, 153) est cintré avec un rayon de courbure inférieur à celui du tube partiel (151).

4. Débitmètre massique Coriolis selon la revendication 1 à 3, pour lequel le tube de mesure (15) présente un diamètre nominal inférieur à 10 mm, notamment un diamètre nominal d'env. 1 mm.

5. Débitmètre massique Coriolis selon la revendication 1 à 4, pour lequel la masse du support (12) est grande comparée à la masse du tube partiel (151).

6. Débitmètre massique Coriolis selon la revendication 1 à 5, pour lequel une pièce (171) du premier capteur (17) reliée avec le tube partiel (151) et une pièce (181) du deuxième capteur (18) reliée avec le tube partiel (153) présentent une faible masse comparée à la masse du tube partiel.
